# EUROPEAN PATENT SPECIFICATION

(11) **EP 0 884 194 B1**
(45) Date of publication and mention of the grant of the patent: **08.10.2003**
(21) Application number: 98303728.4
(22) Date of filing: 13.05.1998
(51) Int. Cl.: B41J 13/00

(54) **Automatic paper feeding device in a multifunctional machine**
Automatische Papierzuführvorrichtung in einer multifunktionellen Maschine
Dispositif d'alimentation automatique de papier dans une machine multifonctionnelle

(30) Priority: 13.05.1997 KR 9718585
(43) Date of publication of application: 16.12.1998
(73) Proprietor: Samsung Electronics Co., Ltd., Suwon-city, Kyungki-do (KR)
(72) Inventor: Hwang, Seung-taik, Seoul (KR)
(74) Representative: Sanderson, Nigel Paul

(56) References cited:
- EP-A- 0 650 843
- PATENT ABSTRACTS OF JAPAN vol. 012, no. 184 (E-614), 28 May 1988 & JP 62 286371 A (CANON INC), 12 December 1987
- PATENT ABSTRACTS OF JAPAN vol. 004, no. 092 (M-018), 3 July 1980 & JP 55 048139 A (RICOH CO LTD), 5 April 1980

## Description

The present invention relates to an automatic feeding device suitable for use in a multifunctional machine, and more particularly to an automatic paper feeding device in a multifunctional machine which integrates the functions of a copier or printer, and a scanner or facsimile and which is capable of reducing abrasion of an automatic document feeding rubber by ensuring that an automatic document feeding roller and the automatic document feeding rubber cannot contact each other when a recordable medium is automatically fed.

A multifunctional machine is manufactured to perform functions such as of a printer, a copier, a scanner and a facsimile in a machine. An automatic paper feeding device in the multifunctional machine manipulates a recordable medium (copying paper or the like) and a document such that the recordable medium is fed when the machine performs the function of a printer or copier and the document is fed when the machine performs the function of a scanner or facsimile.

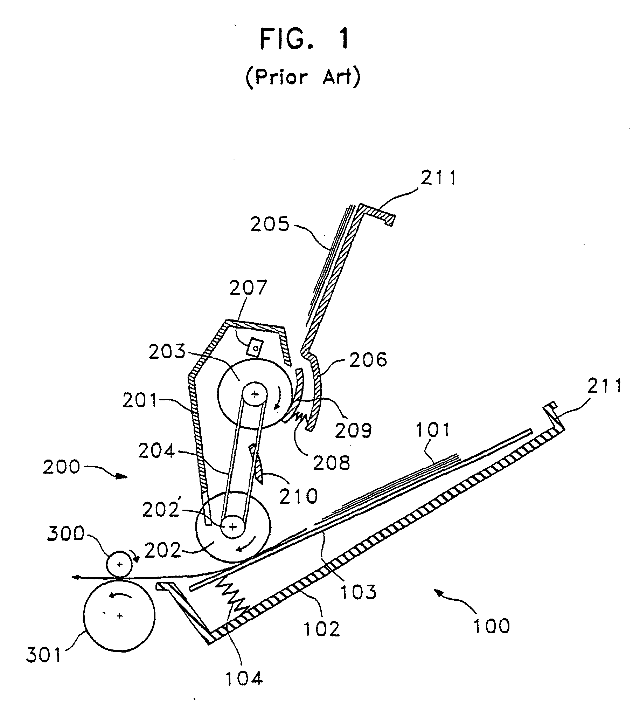

The automatic paper feeding device in the conventional multifunctional machine is explained, with reference to FIG. 1.

As shown in the drawing, a recordable medium cassette 100 is attachable/detachable to a main body (not illustrated) of the multifunctional machine and a plurality of recordable media (eg. paper sheets) 101 are collected in the recordable medium cassette 100. At an upper part of the inner side of the main body facing the recordable medium cassette 100, a paper feeding unit 200 is mounted for feeding the recordable medium 101 of the recordable medium cassette 100. A document cassette 206 is provided from which the document 205 which is guided to the paper feeding unit 200 by a separate path. Moreover, by locating a pair of transporting rollers 300 and 301 close to the recordable medium cassette 100, the recordable medium 101 or the document 205 is transported to the inside of the main body.

The recordable medium cassette 100 includes a recordable medium case 102; a recordable medium feeding plate 103 in which a plurality of recordable media 101 are stacked; and a compressed coil spring 104 which is an resilient or elastic element to be located between the recordable medium case 102 and the recordable medium feeding plate 103 and which resiliently or elastically supports the recordable medium feeding plate 103.

The paper feeding unit 200 includes a pickup roller 202 for transporting the recordable medium 101 one by one to the inside of the main body; an automatic document feeding (ADF) roller 203 which is connected to the pickup roller 202 through a suitable drive means or other power conveying unit such as an idle gear or a timing belt 204 and transports the document 205 one by one (ie sheet by sheet) to the inside of the main body; a cover 201 for supporting and covering an assembly of the pickup roller 202 and the ADF roller 203; a document cassette 206 which is integrally fixed at one side of the cover 201 neighbouring ADF roller 203 and which guides the transportation of the document 205; and an automatic document feeding (ADF) rubber 209 which is urged into contact with the ADF roller 203 with a predetermined pressure by a compressed coil spring 208 which is a resilient or elastic element located towards one end of the document cassette 206

The cover 201 is located rotatably by means of a rotary shaft 202' of the pickup roller 202. One of the ADF roller 203 and the pickup roller 202 is connected to a motor which is not illustrated, and power is conveyed to the ADF roller 203 and the pickup roller 202 through the timing belt 204.

Here, the recordable medium 101 is a sheet for recording predetermined data when the multifunctional machine performs the function of a copier or printer, and the document 205 is a sheet containing data to be transmitted when the multifunctional machine performs the function of a facsimile.

Reference numerals 210 and 211 are a document guide and a locking unit for locking/unlocking the document cassette 206 to the recordable medium cassette 100 when the document 205 is automatically fed. In addition, 207 is a document sensor for sensing the document 205 located on the document cassette 206.

The operation of the automatic paper feeding device in the conventional multifunctional machine having the above structure is explained with reference to the drawings.

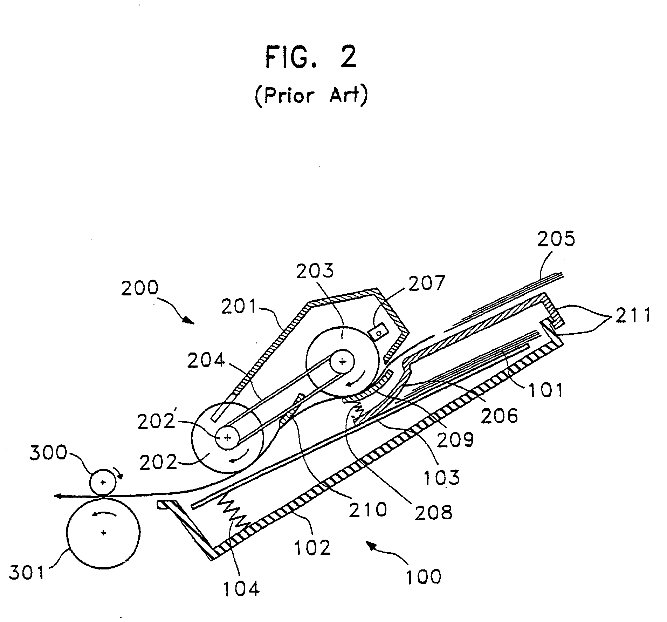

FIG. 1 is a sectional view illustrating the recordable medium feeding state in the automatic paper feeding device of the conventional multifunctional machine; and FIG. 2 is a sectional view illustrating the document feeding state in the automatic paper feeding device of the conventional multifunctional machine.

Referring to FIG. 1, in order to perform the function of printing or copying in the multifunctional machine, when the cassette locking unit 211 which locks together the document cassette 206 and the recordable medium cassette 100 is released and the cover 201 is raised based on the rotary shaft 202' of the pickup roller 202, the recordable medium feeding plate 103 of the recordable medium cassette 100 is raised upward by the elasticity (resilience) of the compressed coil spring 104 which is the elastic (resilient) element. Accordingly, the recordable medium 101 which is located on the recordable medium feeding plate 103 is urged into contact with the pickup roller 202. At this time, since the recordable medium feeding plate 103 is supported elastically (resiliently) by the compressed coil spring 104 which is the elastic element, the recordable medium 101 is pressed by the pickup roller 202 and the recordable medium feeding plate 103 and is inserted between them.

After that, when the motor is driven, the pickup roller 202 connected to the motor is rotated and the ADF roller 203 which is connected to the pickup roller 202 by the timing belt 204 is therefore also rotated in the same direction as the pickup roller 202. As the pickup roller 202 is rotated, the recordable medium 101 which is located on the recordable medium feeding plate 103 is transported by the frictional operation against the pickup roller 202 to the transporting rollers 300 and 301 one by one (sheet by sheet), and then transported to the inside of the main body through the transporting rollers 300 and 301.

Here, since no document 205 is stacked in the document cassette 206, the document 205 is not fed from the document cassette 206 even if the pickup roller 202 and the ADF roller 203 are rotated by means of the timing belt 204. The ADF roller 203 is continuously rotated until the copying or printing operation is completed, whilst contacting the ADF rubber 209 of the document cassette 206.

Referring to FIG. 2, when the cover 201 is rotated based on the rotary shaft 202' and lowered downward, the document cassette 206 and the recordable medium cassette 100 are mutually locked by the cassette locking unit 211. Accordingly, the document cassette 206 is urged into contact with the recordable medium 101 of the recordable medium cassette 100 and presses the recordable medium feeding plate 103. At this time, the top end of the document cassette 206 which is connected to the ADF rubber 209 by means of the spring 208 is lowered downward and located at a position lower than the pickup roller 202 maintaining a surface level. Accordingly, when the document cassette 206 and the recordable medium cassette 100 are mutually locked by the cassette locking unit 211 maintaining a surface level, the top end of the document cassette 206 presses the recordable medium feeding plate 103 and the pickup roller 202 is apart from the recordable medium 101 located on the recordable medium feeding plate 103.

In this state, when a plurality of documents 205 are stacked in the document cassette 206 so that they can be inserted between the ADF roller 203 and the ADF rubber 209, the document sensor 207 senses the document 205 and the motor is controlled by a control unit which is not illustrated. For example, in the case that the rotary shaft 202' of the pickup roller 202 is attached to the motor, the ADF roller 203 is rotated in the same direction by means of the timing belt 204.

When the ADF roller 203 is rotated, the document 205 located on the document cassette 206 passes through the pickup roller 202 one by one (sheet by sheet) along the document guide 210 by the frictional operation against the ADF rubber 209.

The document 205 which has passed through the pickup roller 202 is transported to the transporting rollers 300 and 301 and then transported to the inside of the main body by the action of the transporting rollers 300 and 301.

In the automatic paper feeding device of the conventional multifunctional machine having the above structure, in the case that the document is automatically fed using the facsimile function, the ADF roller is contacted to the ADF rubber and rotated on locating the document between the ADF roller and the ADF rubber. In this case, the abrasion of the ADF rubber cannot be avoided.

In addition, in the case that the recordable medium is automatically fed using the copying or printing function of the multifunctional machine, since the ADF roller is rotated whilst being contacting directly the ADF rubber, the ADF rubber is abraded severely.

When the ADF rubber is severely abraded, since the friction force of the ADF rubber which enables the document to be fed is reduced, a lack of grip results between surfaces of the document and the ADF rubber. As a result, a paper jam can occur or the document may not be correctly fed.

In addition, since the ADF rubber should be exchanged periodically in order to solve the above problem, it is inconvenient to manage and use the multifunctional machine since costs and maintenance requirements are higher.

Therefore, the present invention seeks to provide an automatic paper feeding device for a multifunctional machine which integrates the functions of a printer and/or copier and a scanner and/or facsimile and which is capable of reducing abrasion of an automatic document feeding rubber by ensuring that an automatic document feeding roller and the automatic document feeding rubber cannot contact each other when a recordable medium is automatically fed.

According to the present invention, in the automatic paper feeding device in a multifunctional machine including a recordable medium cassette, a document cassette and a paper feeding unit, the document cassette is separable rotatably from the feeding unit. When performing a first function in the multifunctional machine, the automatic document feeding (ADF) rubber of the document cassette is separated from the automatic document feeding (ADF) roller of the paper feeding unit. When performing a second function in the multifunctional machine, the ADF rubber of the document cassette is urged against the ADF roller of the paper feeding unit.

In the present invention, the paper feeding unit includes: a pickup roller operable to transport a recordable medium to a pair of transporting rollers one by one; an automatic document feeding (ADF) roller which is connected to the pickup roller and is operable to transport the document to the transporting rollers one by one; a cover for supporting and covering an assembly of the pickup roller and ADF roller; a document cassette which is rotatably connected by means of a hinge or pivot at one side of the cover neighbouring the ADF roller; an ADF rubber which is operably urged into contact with the ADF roller by a biasing means (such as a compressed coil spring) located on one end of the document cassette with a predetermined pressure; and an automatic document feeding (ADF) roller/rubber contacting unit operable to separate the ADF roller and ADF rubber when performing the first function and to allow contact of the ADF roller and ADF rubber when performing the second function.

Preferably, the ADF roller/rubber contacting unit includes a first locking unit which is fixed at the paper feeding unit; and a second locking unit which is fixed at the document cassette corresponding to the first locking unit.

Preferably, the first and second locking units each have the shape of a hook, and one of the first and second locking units is an elastic or resilient body.

Preferably, the first function is a copying or printing operation, and the second function is a scanning or fax operation.

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein;
FIG. 1 is a sectional view illustrating a recordable medium feeding state in a conventional multifunctional . machine;
FIG. 2 is a sectional view illustrating a document feeding state in the multifunctional machine of FIG. 1;
FIG. 3 is a sectional view illustrating a recordable medium feeding state in an automatic paper feeding device of a multifunctional machine according to the present invention; and
FIG. 4 is a sectional view illustrating a document feeding state in the automatic paper feeding device of the multifunctional machine according to the present invention.

The objects, characteristics and advantages of the above-described invention will be more clearly understood through the preferable embodiments referring to the attached drawings.

For reference, the same reference numerals are employed for corresponding elements in the device of the invention and in the conventional device.

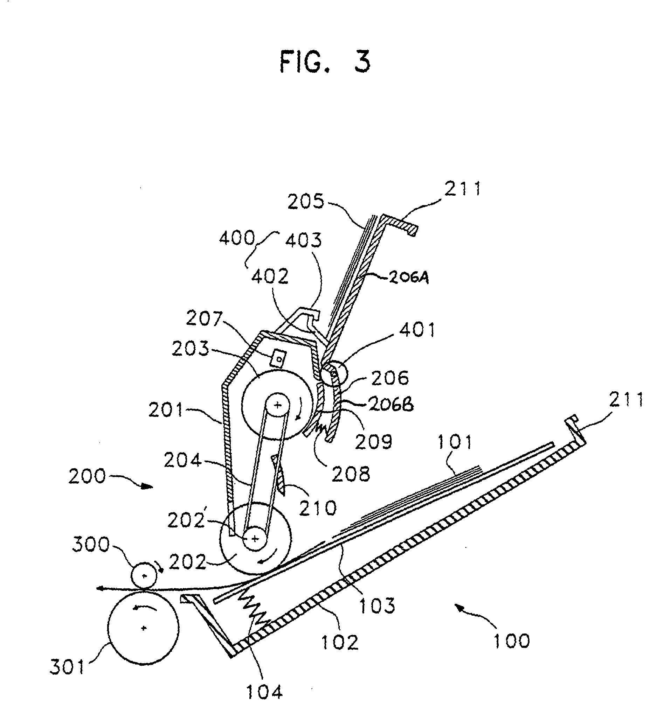

Referring to FIG. 3, a recordable medium cassette 100 is attachable/detachable to a main body (not illustrated) of a multifunctional machine, and a plurality of recordable media 101 are collected in the recordable medium cassette 100. At the upper part of the inner side of the main body facing the recordable medium cassette 100, a paper feeding unit 200 is mounted for feeding the recordable medium 101 of the recordable medium cassette 100. A document cassette 206 is provided for supplying a document 205 to the paper feeding unit 200 by a separate path. Moreover, by locating a pair of transporting rollers 300 and 301 close to the recordable medium cassette 100, the recordable medium 101 or the document 205 is transported to the inside of the main body.

The recordable medium cassette 100 includes a recordable medium case 102 having a collection space; a recordable medium feeding plate 103 in which a plurality of recordable media 101 are stacked; and a biasing means (such as a compressed coil spring 104 or other elastic or resilient biasing means) which is located between the recordable medium case 102 and the recordable medium feeding plate 103 and which resiliently supports the recordable medium feeding plate 103.

According to one embodiment of the present invention, the paper feeding unit 200 includes a pickup roller 202 for transporting the recordable media 101 one by one (that is, for example, page by page or sheet by sheet) to the inside of the main body; an automatic document feeding (ADF) roller 203 which is connected to the pickup roller 202 through a drive means 204 such as an idle gear or a timing belt and which transports the documents 205 one by one (that is, for example, page by page or sheet by sheet) to the inside of the main body; a cover 201 for supporting and covering an assembly of the pickup roller 202 and the ADF roller 203; the document cassette 206 which is rotatably connected at one side of the cover 201 neighbouring the ADF roller 203 with a pivot or hinge; an ADF rubber 209 which is contactable at a predetermined pressure with the ADF roller 203 by a biasing means such as a compressed coil spring 208, which is an elastic or resilient element located at one end of the document cassette 206; and an automatic document feeding (ADF) roller/rubber contacting unit 400 for separating the ADF roller 203 and ADF rubber 209 when performing a first function and contacting the ADF roller 203 and ADF rubber 209 when performing a second function.

The document cassette 206 is connected at one side of the cover 201 neighbouring the ADF roller 203 with the pivot or hinge 401 and is rotatable clockwise or counterclockwise about the pivot or hinge. Where the document cassette 206 is connected by means of a pivot 401, its first and second parts 206A,206B will normally be integrally formed so the document cassette 206 consists of a substantially rigid unit. Where the document cassette 206 is connected by means of a hinge 401, the first and second parts thereof 206A,206B may have at least some degree of independent movement with respect to each other about the hinge 401.

The ADF roller/rubber contacting unit 400 includes cooperating engagement formations 402,403 which may take the form of locking or latching means. A first engagement formation 403 is fixed to the cover 201. A second engagement formation 402 is fixed to the document cassette 206. As the document cassette 206 is rotated clockwise or counterclockwise based on the pivot or hinge 401, the first and second engagement formations 403 and 402 are disengaged and engaged, that is, disconnected or connected, unlatched or latched. In the embodiment illustrated, the second locking means 402 is located at so as not to disturb the transportation of the document 205.

The first and second locking means 403 and 402 form a cooperating pair and perform a locking/unlocking (latching/unlatching) operation. Various different structures for the first and second engagement formations 403 and 402 are possible. For example, by forming each of the first and second engagement formations 403 and 402 in a hook shape and manufacturing the first engagement formation 403 with an elastic or resilient body, when the second engagement formation 402 is connected to the first engagement formation 403, the first engagement formation 403 can be deflected resiliently or elastically, and thereby they are locked or unlocked (latched or unlatched).

As described above, in the case that the multifunctional machine performs the first function such as copying or printing, the ADF roller/rubber contacting unit 400 separates the ADF roller 203 from the ADF rubber 209. On the contrary, in the case of performing the second function such as a fax operation, the ADF roller/rubber contacting unit 400 urges the ADF rubber 209 against the ADF roller 203.

The operation of the automatic paper feeding device in the multifunctional machine according to the present invention having the above structure is explained, referring to the drawings.

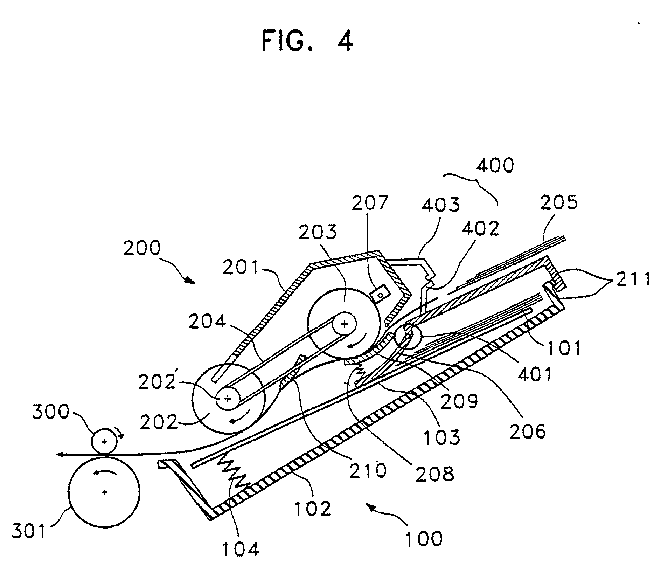

FIG. 3 is a sectional view illustrating the recordable medium feeding state in the automatic paper feeding device of the multifunctional machine; and FIG. 4 is a sectional view illustrating the document feeding state in the automatic paper feeding device of the multifunctional machine according to the present invention.

As shown in FIG. 3, in the case of performing a copying or printing function of the multifunctional machine, on release of a cassette locking or latching unit 211 which locks or latches together the document cassette 206 and the recordable medium cassette 100, the cover 201 is raised based on the rotary shaft 202' of the pickup roller 202 and the recordable medium feeding plate 103 of the recordable medium cassette 100 is urged upward by the bias of the compressed coil spring 104 which is the elastic or resilient element. Accordingly, the recordable medium 101 located on the recordable medium feeding plate 103 is urged into contact with the pickup roller 202. Since the recordable medium feeding plate 103 is resiliently (or elastically) supported by the compressed coil spring 104, the recordable medium 101 is pressed by the pickup roller 202 and the recordable medium feeding plate 103 and inserted between them.

When the document cassette 206 is rotated by a predetermined angle counterclockwise based on the pivot or hinge 401, as shown in FIG. 3, engagement formations 402 and 403 of hook shape are mutually locked or latched. As a result, the ADF rubber 209 of the document cassette 206 is spaced apart from the ADF roller 203 by a predetermined distance.

After that, when the motor is driven, the pickup roller 202 connected to the motor is rotated and the ADF roller 203, connected to the pickup roller 202 through the timing belt 204, is rotated in the same direction. As the pickup roller 202 is rotated, the recordable media 101 located on the feeding plate 103 are transported by the frictional operation against the pickup roller 202 toward the transporting rollers 300 and 301 one by one. The recordable medium 101 passes through the transporting rollers 300 and 301 and then is transported to the inside of the main body.

At this time, since no document 205 is stacked in the document cassette 206, the document 205 is not fed from the document cassette 206 even though the pickup roller 202 and the ADF roller 203 are rotated by means of the timing belt 204. The ADF roller 203 is rotated continuously without being in contact with the ADF rubber 209 of the document cassette 206 until the copying or printing operation is completed.

In addition, since the ADF roller 203 is rotated without being in contact with the ADF rubber 209, the ADF rubber 209 is not abraded at all. Accordingly, since the life span of the ADF rubber 209 is lengthened and it is unnecessary to exchange the ADF rubber 209 periodically, there is a benefit in maintaining the ADF rubber.

On the other hand, in the case of using the fax operation of the multifunctional machine, when the document cassette 206 is rotated clockwise based on the pivot or hinge 401, the second engagement formation 402 of the document cassette 206 is released from the first engagement formation 403.

When the cover 201 is rotated about the rotary shaft 202' of the pickup roller 202 and then lowered downward, the document cassette 206 and the recordable medium cassette 100 are mutually locked or latched by the cassette locking unit 211. Accordingly, the document cassette 206 is contacted with the recordable medium 101 of the recordable medium cassette 100 and presses against the recordable medium feeding plate 103. At this time, the top end of the document cassette 206 which is connected to the ADF rubber 209 by means of the spring 208 is lowered downward and located at a position lower than the pickup roller 202 maintaining a surface level. Accordingly, when the document cassette 206 and the recordable medium cassette 100 are mutually locked by the cassette locking unit 211 maintaining a surface level, the top end of the document cassette 206 presses the recordable medium feeding plate 103 and the pickup roller 202 is spaced apart from the recordable medium 101 located on the recordable medium feeding plate 103. Moreover, the ADF rubber 209 is raised upward by the spring 208 and urged into contact with the ADF roller 209.

When a plurality of documents 205 are stacked in the document cassette 206 so that they can be inserted between the ADF roller 203 and the ADF rubber 209, a document sensor 207 senses the document 205 and the motor is controlled by a control unit which is not illustrated. For example, in the case that the rotary shaft 202' of the pickup roller 202 is connected to the motor, the ADF roller 203 is rotated in the same direction by means of the timing belt 204.

When the ADF roller 203 is rotated, the documents 205 located on the document cassette 206 pass through the pickup roller 202 one by one along a document guide 210 by the frictional operation against the ADF rubber 209. The document 205 which passed through the pickup roller 202 is transported to the transporting rollers 300 and 301 and then transported to the inside of the main body by the action of the transporting rollers 300 and 301.

As described above, in the case that the recordable medium within the recordable medium cassette is automatically fed in order to perform the copying or printing operation of the multifunctional machine, the ADF roller and the ADF rubber which are used for feeding the document are not in contact with each other, thereby reducing unnecessary abrasion of the ADF rubber.

In addition, as the abrasion of the ADF rubber is noticeably reduced, the feeding performance is enhanced, and thereby the occurrence of paper jams is reduced.

Moreover, as the abrasion of the ADF rubber is noticeably reduced, the life span of the ADF rubber is lengthened, and thereby users can easily use the multifunctional machine and the managing cost is reduced.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims. For example, it is possible to form slits at both ends of the document cassette and a pair of hooks which are fixed at the cover so as to correspond to each other. In addition, it is possible to form the second locking unit with an elastic material.

## Claims

1. An automatic paper feeding device for a multifunctional machine comprising:
a recordable medium cassette (100) which cassette is attachable to a main body portion of the machine and in which a plurality of recordable media (101) may be stacked;
a document cassette (206) for receiving a document (205);
a pair of transporting rollers (300, 301) for transporting said recordable medium (101) and said document (205) into said main body portion; and
a paper feeding unit (200) into which said recordable medium (101) and said document (205) are receivable by separate paths for feeding said recordable medium (101) and said document (205) to said transporting rollers (300, 301), which paper feeding unit (200) comprises a pickup roller (202) for transporting said recordable medium (101) to said transporting rollers (300, 301), an automatic document feeding (ADF) roller (203) connected to said pickup roller (202) for transporting said document (205) to said transporting rollers (300, 301), a cover portion (201) for supporting and covering the assembly of said pickup roller (202) and said ADF roller, an ADF rubber (209) located at one end of said document cassette and which is biased towards said ADF roller (203) at a predetermined pressure by a biasing (209) means (208),
**characterised in that** said document cassette (206) is movable between a first position in which said ADF rubber (209) and said ADF roller (203) are spaced apart and in which said paper feeding unit (200) performs a first function and a second position in which said ADF rubber (209) is urged against said ADF roller (203) and in which said paper feeding unit (200) performs a second function.

2. An automatic paper feeding device as claimed in Claim 1 wherein said document cassette (206) is connected to said cover portion (201) by means of a pivot or hinge (401) and said document cassette (206) moves between said first and second positions about said pivot or hinge (401).

3. An automatic paper feeding device as claimed in Claim 1 or 2 wherein said first function is a copying or printing operation.

4. An automatic paper feeding device as claimed in any of claims 1 to 3 wherein said second function is a scanning or fax operation.

5. An automatic paper feeding device as claimed in any preceding claim further comprising cooperating locking means (402, 403) provided respectively on said cover portion (201) and said document cassette (206) for retaining said document cassette (206) in its first position.

6. An automatic paper feeding device as claimed in Claim 5 wherein said locking means (402, 403) comprise engageable hook shaped formations.

7. An automatic paper feeding as claimed in Claim 6, wherein one of said locking means is elastic or resilient.

8. An automatic paper feeding device as claimed in any preceding claim wherein said biasing means is a coil spring (208).

9. An automatic paper feeding device as claimed in any preceding claim wherein in said second position said document cassette (206) is urged against a portion of said recordable medium cassette (100).

10. An automatic paper feeding device as claimed in any preceding claim wherein said biasing means (208) is disposed between said ADF rubber (209) and said document cassette (206).

## Patentansprüche

1. Automatische Papierzuführeinrichtung für eine multifunktionale Maschine, umfassend:
eine Aufzeichnungsmittelkassette (100), wobei die Kassette an einem Hauptteil der Maschine anbringbar ist, und in die eine Vielzahl von Aufzeichnungsmitteln (101) gestapelt werden können;
eine Dokumentenkassette (206) zur Aufnahme eines Dokuments (205);
ein Paar von Transportrollen (300, 301) zum Transport des Aufzeichnungsmittels (101) und des Dokuments (205) in den Hauptteil; und
eine Papierzuführeinheit (200), in die das Aufzeichnungsmittel (101) und das Dokument (205) mittels getrennter Wege zur Zuführung des Aufzeichnungsmittels (101) und des Dokuments (205) zu den Transportrollen (300, 301) aufnehmbar sind, wobei die Papierzuführeinheit (200) eine Aufnahmerolle (202) zum Transport des Aufzeichnungsmittels (101) zu den Transportrollen (300, 301), eine mit der Aufnahmerolle (202) verbundene automatische Dokumentenzuführ(ADZ)-Rolle (203) zum Transport des Dokuments (205) zu den Transportrollen (300, 301), ein Bedeckungsteil (201) zum Halten und Bedecken des Aufbaus der Aufnahmerolle (202) und der ADZ-Rolle und ein ADZ-Förderelement (209) aufweist, das an einem Ende der Dokumentenkassette angeordnet ist, und das in Richtung der ADZ-Rolle (203) mit einem vorbestimmten Druck mittels eines Vorspannmittels (208, 209) vorgespannt ist,
**dadurch gekennzeichnet, daß** die Dokumentenkassette (206) zwischen einer ersten Position, in der das ADZ-Förderelement (209) und die ADZ-Rolle (203) voneinander beabstandet sind und in der die Papierzuführeinheit (200) eine erste Funktion durchführt, und einer zweiten Position beweglich ist, in der das ADZ-Förderelement (209) gegen die ADZ-Rolle (203) gedrängt ist und in der die Papierzuführeinheit (200) eine zweite Funktion durchführt.

2. Automatische Papierzuführeinrichtung nach Anspruch 1, wobei die Dokumentenkassette (206) mit dem Bedeckungsteil (201) mittels eines Drehelementes oder eines Gelenks (401) verbunden ist, und wobei sich die Dokumentenkassette (206) um das Drehelement oder das Gelenk (401) herum zwischen der ersten und der zweiten Position bewegt.

3. Automatische Papierzuführeinrichtung nach Anspruch 1 oder 2, wobei die erste Funktion eine Kopier- oder Druckoperation ist.

4. Automatische Papierzuführeinrichtung nach einem der Ansprüche 1 bis 3, wobei die zweite Funktion eine Scann- oder Faxoperation ist.

5. Automatische Papierzuführeinrichtung nach einem der vorangehenden Ansprüche, ferner umfassend zusammenwirkende Feststellmittel (402, 403), die auf dem Bedeckungsteil (201) bzw. auf der Dokumentenkassette (206) bereitgestellt sind, um die Dokumentenkassette (206) in ihrer ersten Position zu halten.

6. Automatische Papeierzuführeinrichtung nach Anspruch 5, wobei die Feststellmittel (402, 403) eingreifbare hakenförmige Gestaltungen aufweisen.

7. Automatische Papierzuführeinrichtung nach Anspruch 6, wobei eines der Feststellmittel elastisch oder dämpfend ist.

8. Automatische Papierzuführeinrichtung nach einem der vorangehenden Ansprüche, wobei das Vorspannmittel eine Schraubenfeder (208) ist.

9. Automatische Papierzuführeinrichtung nach einem der vorangehenden Ansprüche, wobei in der zweiten Position die Dokumentenkassette (206) gegen einen Abschnitt der Aufzeichnungsmittelkassette (100) gedrängt ist.

10. Automatische Papierzuführeinrichtung nach einem der vorangehenden Ansprüche, wobei das Vorspannmittel (208) zwischen dem ADZ-Förderelement (209) und der Dokumentenkassette (206) angeordnet ist.

## Revendications

1. Dispositif d'alimentation automatique de papier pour une machine multifonctionnelle, comprenant :
une cassette de support enregistrable (100) laquelle cassette peut être attachée à une partie de corps principal de la machine et dans laquelle une pluralité de supports enregistrables (101) peut être empilée ;
une cassette de document (206) permettant de recevoir un document (205) ;
une paire de rouleaux de transfert (300, 301) permettant de transférer ledit support enregistrable (101) et ledit document (205) dans ladite partie de corps principal ; et
une unité d'alimentation de papier (200) dans laquelle ledit support enregistrable (101) et ledit document (205) peuvent être reçus par des chemins séparés pour alimenter ledit support enregistrable (101) et ledit document (205) jusqu'auxdits rouleaux de transfert (300, 301), l'unité d'alimentation de papier (200) comprenant un rouleau d'entraînement (202) permettant de transférer ledit support enregistrable (101) jusqu'auxdits rouleaux de transfert (300, 301), un rouleau d'alimentation automatique de documents (ADF) (203) connecté audit rouleau d'entraînement (202) pour transférer ledit document (205) jusqu' auxdits rouleaux de transfert (300, 301), une partie de capot (201) permettant de supporter et de couvrir l'ensemble composé dudit rouleau d'entraînement (202) et dudit rouleau ADF, un élément en caoutchouc ADF (209) positionné à une extrémité de ladite cassette de documents et qui est incliné vers ledit rouleau ADF (203) à une pression prédéterminée par des moyens (208) d'inclinaison (209),
**caractérisé en ce que** ladite cassette de documents (206) est mobile entre une première position dans laquelle ledit élément en caoutchouc ADF (209) et ledit rouleau ADF (203) sont espacés et dans laquelle ladite unité d'alimentation de papier (200) effectue une première fonction et une deuxième position dans laquelle ledit élément en caoutchouc ADF (209) est poussé contre ledit rouleau ADF (203) et dans laquelle ladite unité d'alimentation de papier (200) effectue une deuxième fonction.

2. Dispositif d'alimentation automatique de papier selon la revendication 1, dans lequel ladite cassette de documents (206) est connectée à ladite partie de capot (201) au moyen d'un pivot ou d'une charnière (401) et ladite cassette de documents (206) se déplace entre lesdites première et deuxième positions autour dudit pivot ou de ladite charnière (401).

3. Dispositif d'alimentation automatique de papier selon la revendication 1 ou 2, dans lequel la première fonction est une opération de copie ou d'impression.

4. Dispositif d'alimentation automatique de papier selon l'une quelconque des revendications précédentes 1 à 3, dans lequel ladite deuxième fonction est une opération de numérisation ou de télécopie.

5. Dispositif d'alimentation automatique de papier selon l'une quelconque des revendications précédentes, comprenant en outre des moyens de verrouillage coopérants (402, 403) prévus respectivement sur ladite partie de capot (201) et ladite cassette de documents (206) pour retenir ladite cassette de documents (206) dans sa première position.

6. Dispositif d'alimentation automatique de papier selon la revendication 5, dans lequel lesdits moyens de verrouillage (402, 402) comprennent des configurations d'engagement en forme de crochet.

7. Dispositif d'alimentation automatique de papier selon la revendication 6, dans lequel l'un desdits moyens de verrouillage est élastique ou résilient.

8. Dispositif d'alimentation automatique de papier selon l'une quelconque des revendications précédentes, dans lequel lesdits moyens d'inclinaison correspondent à un ressort en spirale (208).

9. Dispositif d'alimentation automatique de papier selon l'une quelconque des revendications précédentes, dans lequel dans ladite deuxième position, ladite cassette de documents (206) est poussée contre une partie de ladite cassette de supports enregistrables (100).

10. Dispositif d'alimentation automatique de papier selon l'une quelconque des revendications précédentes, dans lequel lesdits moyens d'inclinaison (208) sont disposés entre ledit élément en caoutchouc ADF (209) et ladite cassette de documents (206).
